# EUROPEAN PATENT APPLICATION

(11) **EP 1 231 579 A2**
(43) Date of publication of application: **14.08.2002**
(21) Application number: 02250815.4
(22) Date of filing: 06.02.2002
(51) Int. Cl.: G07F 19/00

(54) **Public access to the internet**

(30) Priority: 09.02.2001 GB 0103159
(71) Applicant: Honeyframe Software Development Limited, Telford, Shropshire TF1 4GY (GB)
(72) Inventor: Preece, Christopher,P Honeyframe software dvpt Ltd, Telford, TF1 7GY (GB)
(74) Representative: Wilson Gunn M'Caw

(57) **Abstract**

Public access to the Internet using an Internet kiosk (2) whereby payment for goods and services (6) on the Internet is affected by a line of credit (14) arranged by the operator of the Internet kiosk (2), wherein the user makes payment (8) to the kiosk (2) and processing means (10) credits an electronic purse (12) with the appropriate credit-line payment (14) which can be used by the user whilst on-line to purchase goods or services (6).

## Description

The present invention relates to public access to the Internet and in particular, but not exclusively, to Internet kiosks.

An Internet kiosk is a terminal where public access to the Internet is attained for a pre-paid amount. The kiosk is usually stand alone in for example an airport lounge, hotel etc and has means to accept prepayment, for example a card reader for credit, debit and telephone cards, or a payment slot for monetary notes, coins and tokens. The kiosk may be one of a plurality of terminals in for example an Internet café, and prepayment is then made to a central controller which then switches an individual terminal on for the pre-paid period of time, allowing the user to access the Internet for a pre-paid period of time.

E-commerce is becoming increasingly popular and it is possible to buy goods over the Internet from any country and have them delivered to your home, or to buy for example insurance and holidays etc. Also certain web sites are not free to access and additional payment must be made to enter that site or for down loading information from that site. The payment for such goods and access is made by the user providing certain personal details and details of their credit card or debit card over the Internet to the web site they wish to enter, or from which they wish to make a purchase. Many users are not comfortable with providing such details because they fear that computer hackers may obtain that information and misuse it. They also fear that the information might be misdirected and that in many instances they do not know the credentials of the web site and therefore what use the proprietor of that site may make of their details. Also a user may simply not wish to have details of a visit to a particular web site appear on their credit card statement. Furthermore, providing such details is time consuming which increases the cost to the user who is also paying for time spent on-line. Also, if a user does not have a credit or debit card he is unable to make any necessary additional payment in order to purchase goods or services on-line.

It is an object of the present invention to provide a means of public access to the Internet which overcomes or alleviates the above described drawbacks.

In accordance with one aspect of the present invention there is provided a means for public access to the Internet having processing means and an electronic purse, wherein the processing means swaps, in use, a cash payment by the user for a designated line of credit arranged by the operator of the means for public access and charges said electronic purse with said credit enabling e-commerce over the Internet using said credit from within said electronic purse.

This has the advantage that if the user does not have a credit/debit card he can pay using coins, notes or tokens for the operators prearranged credit facilities, which are then used to purchase goods or services or access to a particular site on the Internet. For this purpose the means for public access may be provided with money payment receiving and verification means which accepts the amount pre-paid by the user and verifies the amount paid to the processing means.

The payment receiving and verification means may also accept payment by the users payment card. This allows the user to use his own credit or debit card, smart card or telephone card to pre purchase credit facilities, with the advantage that the users card details are not sent over the Internet, only the credit details of the operator provided credit-line facilities are sent.

The means for providing public access to the Internet may also have payment deduction means for deducting from the user's payment a payment for the time to be spent on-line. Furthermore payment storage means may be provided in order to retain the payment for later collection by the operator of the means for public access.

The payment receiving and verification means may comprise means for checking the available credit of the user. This has the advantage that the user's credit limit can be checked before a credit-line is provided by the operator.

In a preferred embodiment the means for public access is an Internet kiosk. The payment receiving and verification means may be the payment receiving and verification means used to pre-pay for time to be spent on-line.

In a further preferred embodiment the means for public access is an Internet café. In this instance the processing means may be shared by a plurality of computer terminals, and selection means may be provided to charge the electronic purse of a particular computer terminal.

In accordance with a second aspect of the present invention there is provided a method of conducting e-commerce on the Internet using a third-party line of credit, the method comprising the steps of charging a means for public access to the Internet with a cash payment, swapping that payment for said third-party line of credit, charging an electronic purse with said third-party credit, and paying for goods or services on the Internet and/or on-line Internet access charges using said credit in the electronic purse.

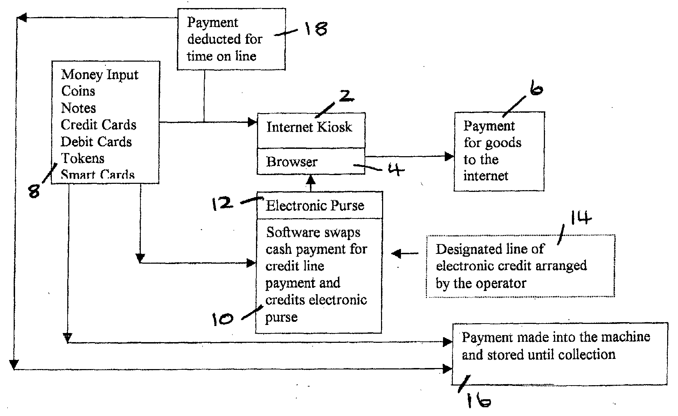

The invention will be described by way of example only with reference to the drawing, which is a block diagram illustrating how goods can be purchased on the Internet in accordance with one embodiment of the present invention.

Referring to the drawing an Internet kiosk is provided comprising a cabinet containing a computer 2 with modem 4 connected to a telephone network for establishing connection to the Internet 6. For this purpose the kiosk has a payment receiving and verification means 8 adapted to accept monetary payment. The payment receiving means 8 has a plurality of means for accepting payment including a card reader for credit, debit, telephone and smart cards, a coin slot for accepting monetary coins and tokens, and a note slot for accepting monetary notes.

In order to access the Internet 6 the user makes a prepayment with respect to a specified amount of time into payment receiving and verification means 8. The user can preselect the required amount of time via the computer's keyhoard with processing means 10, controlled by software, providing on-screen instruction to the user of how much he should pay in order to purchase that time. The user also has the option of making additional pre-payment into the kiosk in order to facilitate payment for goods whilst on-line. Software in the processing means 10 swaps the amount additional cash payment for a credit-line payment and credits an electronic purse 12 with that additional amount. The electronic purse 12 is charged by a third-party electronic line of credit 14 arranged by the operator of the Internet kiosk.

The actual payment made into the payment receiving and verification means 8 by the user is transferred to payment storage means 16 for later collection by the kiosk provider.

The user then accesses the Internet 6 in the usual manner and if payment on-line is required the credit within the electronic purse 12 is used to purchase the goods. The goods are paid for by the third-party line of credit up to the amount pre-paid into the kiosk by the user. If additional payment is required whilst on-line for the purchase of further Internet time or for goods, the user is able to insert a further prepayment into the payment receiving and verification means 8 and this amount can be allocated by the user via the computer controlled by the processor to either further on-line time or to the electronic purse 12 in order to increase the designated credit-line.

When on-line if the user is asked to provide his credit details the processor 10 controlled by software, can upon the instruction of the user, automatically complete the required details with those of the third-party credit, the user merely confirming the amount to be paid.

If prepayment is made by coins, tokens or notes, the payment verification means 6 counts the amount pre-paid and the amount required for payment for on-line time is debited by payment deduction means 18 which instructs computer 2 that the required amount has been paid. Any additional amount is indicated to the processor 10 where it is swopped for credit-line and credited to the electronic purse 12 as described above. The actual payment is transferred into payment storage means 16 as described above.

If the prepayment is by way of the user's payment card (credit, debit etc), the processing means 10 controlled by software sends a signal to the computer 2 to activate the screen whereon a question appears allowing the user to answer that question using the computer keyboard in order for the user to indicate the amount of prepayment to be debited from his payment card. The payment verification means 6 then checks whether that payment card is able to provide the specified prepayment, in that it is connectable via the telephone network and thereby to the card provider to check the user's available credit limit, in the usual manner. Once authorization for the transaction has been received, the amount selected by the user can be debited from the card and allocated to time on-line and for payment of goods whilst on-line, as described above. A record of the transaction is forwarded to the payment storage means 16 for later collection by the kiosk operator.

Although the invention has been described with reference to a stand-alone Internet kiosk, it is to be understood that the third-party on-line credit, which has been prearranged by the kiosk provider, could also be applied to an Internet café where there is a plurality of computer terminals and the prepayment in this instance could be made to the central controller. The central controller could be a payment receiving and verification means via which the user is able to select a particular terminal for use, or could be a manned control desk with the operator taking the payment and authorizing the on-line time and the credit-line for a particular computer terminal.

Although pre-payment in fixed amounts has been described the user could merely specify an upper limit to the amount he wishes to spend, and at the end of the session any remaining credit could be returned to the user. This operation being controlled by the processing means.

Although payment for goods on-line has been described, it is to be understood that the invention could equally apply to the payment of services and for accessing Internet sites which require pre-payment.

## Claims

1. Means for public access to the Internet having processing means (10) and an electronic purse (12), wherein the processing means (10) swaps, in use, a cash payment by the user for a designated line of credit arranged by the operator of the means for public access and charges said electronic purse (12) with said credit enabling e-commerce over the Internet using said credit from within said electronic purse (12).

2. Means for public access as claimed in claim 1, comprising money payment receiving and verification means which accepts the amount paid by the user and verifies the amount paid to the processing means (10).

3. Means for public access as claimed in claim 2, wherein the payment receiving and verification means accepts payment by the users payment card.

4. Means for public access as claimed in claim 3, wherein the payment receiving and verification means comprises means for checking the available credit of the user.

5. Means for public access as claimed in claim 2, 3 or 4, wherein the payment receiving and verification means is the payment receiving and verification means used to pre-pay for time to be spent on-line.

6. Means for public access as claimed in any one of the preceding claims, comprising payment deduction means for deducting from the user's payment a payment for the time to be spent on-line.

7. Means for public access as claimed in any one of the preceding claims comprising payment storage means (16) to retain the payment for later collection by the operator of the means for public access.

8. Means for public access as claimed in any one of the preceding claims, wherein means for public access is an Internet café.

9. Means for public access as claimed in claim 8, wherein the processing means is shared by a plurality of computer terminals, and selection means is provided which is adapted to charge the electronic purse of a particular computer terminal.

10. A method of conducting e-commerce on the Internet using a third-party line of credit, the method comprising the steps of charging a means (8) for public access to the Internet with a cash payment, swapping that payment for said third-party line of credit, charging an electronic purse (12) with said third-party credit, and paying for goods or services on the Internet and/or on-line Internet access charges using said credit in the electronic purse (12).
